# EUROPÄISCHE PATENTANMELDUNG

(11) **EP 4 299 362 A1**
(43) Veröffentlichungstag der Anmeldung: **03.01.2024**
(21) Anmeldenummer: 23176836.7
(22) Anmeldetag: 01.06.2023
(51) Int. Cl.: B60L 15/20

(54) **TRAKTIONSHILFESYSTEM ZUM ERZEUGEN EINES DREHMOMENTS AN EINEM RAD EINES KRAFTFAHRZEUGS ODER ANHÄNGERS, KRAFTFAHRZEUG ODER ANHÄNGER, SOWIE VERFAHREN ZUM BETREIBEN DES TRAKTIONSHILFESYSTEMS**

(30) Priorität: 23.06.2022 DE 102022115669
(71) Anmelder: Huber Automotive AG, 73347 Mühlhausen (DE)
(72) Erfinder: Schützle, Michael, 71549 Auenwald (DE); Koch, Mathias, 72555 Metzingen (DE); Görtler, Thomas, 89264 Weissenhorn (DE)
(74) Vertreter: Hofstetter, Schurack & Partner

(57) **Zusammenfassung**

Traktionshilfesystem (1) zum Erzeugen eines Drehmoments an einem Rad (4) eines Kraftfahrzeugs (2) oder Anhängers (3), mit
- einer elektrischen Maschine (5) zum Erzeugen des Drehmoments, wobei die elektrische Maschine (4) einen Stator (6) und einen Rotor (7) aufweist, und
- einer Steuereinheit (8) zum elektrischen Antreiben der elektrischen Maschine (4) zumindest in Abhängigkeit von einem Geschwindigkeitssignal, nur wenn dieses Geschwindigkeitssignal eine Geschwindigkeit unterhalb eines vorbestimmten Schwellwerts repräsentiert, wobei
- der Rotor (7) entweder zur direkten drehmomentfesten Kopplung mit einer vorbestimmten Felge (9) oder zur indirekten drehmomentfesten Kopplung mit der bestimmungsgemäß geformten Felge (9) über ein Getriebe (10) ausgebildet ist, und
- das Traktionshilfesystem (1) eine Stator-Verbindungseinheit (11) aufweist, wobei die Stator-Verbindungseinheit (11) zur direkten drehmomentfesten Kopplung mit einem bestimmungsgemäßen Fahrzeugbauteil des Kraftfahrzeugs (2) oder Anhängers (3) ausgebildet.

## Beschreibung

Die vorliegende Erfindung betrifft ein Traktionshilfesystem zum Erzeugen eines Drehmoments an einem Rad eines Kraftfahrzeugs oder Anhängers, mit einer elektrischen Maschine zum Erzeugen des Drehmoments, wobei die elektrische Maschine einen Stator und einen Rotor aufweist, und einer Steuereinheit zum Antreiben der elektrischen Maschine zumindest in Abhängigkeit von einem Geschwindigkeitssignal, nur wenn dieses Geschwindigkeitssignal eine Geschwindigkeit unterhalb eines vorbestimmten Schwellwerts repräsentiert. Die Erfindung betrifft weiter ein zugehöriges Kraftfahrzeug oder einen zugehörigen Anhänger zum Anhängen an ein Kraftfahrzeug, sowie ein Verfahren zum Betreiben des Traktionshilfesystems.

Die Erfindung geht aus von einem leichten Nutzkraftfahrzeug oder einem Kraftfahrzeug mit besonderer Zweckbestimmung, insbesondere Reisemobile mit mindestens einer permanent angetriebenen Achse, und mindestens einer Achse ohne einen Antrieb oder mit einem weiteren zuschaltbaren Achsantrieb. Die permanent angetriebene Achse kann beispielsweise die Vorderachse sein, die Achse ohne Antrieb bzw. mit zuschaltbarem Achsantrieb kann beispielsweise die Hinterachse sein. Ebenso geht die Erfindung von einem Anhänger bis zu 3,5 t zulässiges Gesamtgewicht ohne einen Antrieb an mindestens einer Achse aus.

Leichte Nutzkraftfahrzeuge, Kraftfahrzeuge mit besonderer Zweckbestimmung und Anhänger haben sehr unterschiedliche Einsatzbedingungen und Einsatzorte. Die unterschiedlichen Einsatzmöglichkeiten der oben genannten Fahrzeuge bedingen ganz unterschiedliche Aufgabenstellungen für das Antriebssystem. Die schwersten Einsatzbedingungen dürfte wohl das Reisemobil haben. Der Einsatzort eines solchen Fahrzeugs kann in sehr kalten Regionen mit Eis oder Schnee, auf rutschigem Untergrund z.B. eine nasse Wiese oder unbefestigten Straßen mit großen Steigungen sein. Die genannten Fahrzeuge sind meist nicht mit einem konventionellen Allradantrieb ausrüstbar, da ihr Chassis und ihr Aufbau keinen Raum für ein Allradsystem bieten. Folglich können derartige Kraftfahrzeuge bei solchen Bedingungen gerade beim Anfahren die Traktion verlieren, sodass die Räder der angetriebenen Achse durchdrehen und das Kraftfahrzeug nicht anfährt.

Weiterhin gibt es Fahrzeuge für Service und Zustellung, die häufig auf schlechten Straßen und auch im Gebirge ein herkömmliches Allradsystem benötigen, um anzufahren. Nutzfahrzeuge mit solchen Einsätzen verfügen meist über einen permanenten Allradantrieb oder mindestens einen zusätzlich schaltbaren Antrieb an einer der Achsen, was ein Verteilergetriebe und ein Differenzialgetriebe beispielsweise an der Hinterachse erfordert. Diese Nutzfahrzeuge sind somit "überausgerüstet" für diese Einsatzfälle, weil sie unter Normalbedingungen mehr leisten können als erforderlich. Nachteilig daran ist, dass solche Fahrzeuge beispielsweise ein nicht notwendiges Mehrgewicht mit Auswirkung auf Kraftstoff- oder Energieverbrauch aufweisen, der gleichzeitig eine Reduktion der Zuladung bedeutet.

Bei oben beschriebenen Anhängern gibt es keine Systeme, die ein Anfahren des Zugfahrzeuges auf traktionsreduziertem Untergrund unterstützen. Hier entscheidet die Auswahl des Zugfahrzeuges über die Möglichkeit auf traktionsreduziertem Gelände anfahren zu können oder nicht.

Der vorliegenden Erfindung liegt die Aufgabe zugrunde, für ein Kraftfahrzeug oder einen Anhänger einen Achsantrieb für eine weitere Achse zu schaffen, der bei niedrigen Geschwindigkeiten als Anfahrhilfe wirkt.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch einen ersten Aspekt der Erfindung ist ein Traktionshilfesystem zum Erzeugen eines Drehmoments an einem Rad eines Kraftfahrzeugs oder Anhängers bereitgestellt, mit einer elektrischen Maschine zum Erzeugen des Drehmoments, wobei die elektrische Maschine einen Stator und einen Rotor aufweist, und mit einer Steuereinheit zum elektrischen Antreiben der elektrischen Maschine zumindest in Abhängigkeit von einem Geschwindigkeitssignal, nur wenn dieses Geschwindigkeitssignal eine Geschwindigkeit unterhalb eines vorbestimmten Schwellwerts repräsentiert. Die Erfindung zeichnet sich dadurch aus, dass der Rotor entweder zur direkten drehmomentfesten Kopplung mit der vorbestimmten Felge oder zur indirekten drehmomentfesten Kopplung mit der vorbestimmten Felge über ein Getriebe ausgebildet ist, und das Traktionshilfesystem eine erste Stator-Verbindungseinheit aufweist, wobei die erste Stator-Verbindungseinheit zur direkten drehmomentfesten Kopplung mit einem bestimmungsgemäßen Fahrzeugbauteil des Kraftfahrzeugs oder Anhängers ausgebildet.

Das Traktionshilfesystem kann insbesondere nachrüstbar sein für bereits vorhandene Kraftfahrzeuge oder Anhänger. Das nachrüstbare Traktionshilfesystem kann folglich an ein vorgegebenes Kraftfahrzeug oder einen vorgegebenen Anhänger nachträglich angeordnet werden. Im Folgenden können das Kraftfahrzeug und der Anhänger unter dem Oberbegriff Fahrzeug subsumiert sein. Die Kopplung kann insbesondere reversibel verbindbar sein und kann vorzugsweise mechanisch und/oder elektrisch angekoppelt und abgekoppelt werden. Das Traktionshilfesystem bzw. die elektrische Maschine und/oder das Getriebe können insbesondere an das Rad angekoppelt und abgekoppelt werden, vorzugsweise mechanisch und/oder elektrisch.

Bei dem vorgegebenen Rad kann es sich insbesondere um ein Rad einer nicht durch einen Antriebsmotor des Kraftfahrzeuges oder Anhängers angetriebenen Achse bzw. um ein nicht durch den Antriebsmotor angetriebenes Rad handeln. Insbesondere kann sich das Rad an einer, in Fahrtrichtung gesehen, seitlichen Position des Kraftfahrzeuges oder Anhängers befinden. Ebenso kann es vorgesehen sein, dass das Traktionshilfesystem an zwei oder mehreren Rädern ein Drehmoment erzeugt. Insbesondere handelt es sich bei dem Rad um ein Hauptrad bzw. um ein solches, das für einen Fahrbetrieb, vorzugsweise für einen Anfahrbetrieb, erforderlich ist. Entsprechend handelt es sich bei dem Rad nicht um ein Stützrad des Anhängers, welches für einen Rangierbetrieb eines vom Kraftfahrzeug abgekoppelten Anhängers erforderlich ist.

Das vorgegebene Rad umfasst die vorgegebene, bestimmungsgemäß geformte Felge und vorzugsweise einen auf die Felge montierten Reifen. Die Felge kann insbesondere an eine Radnabe des Fahrzeuges angebracht, insbesondere mit dieser verschraubt sein.

Die elektrische Maschine kann vorzugsweise als Gleichstrommotor, insbesondere als bürstenloser Gleichstrommotor, ausgebildet sein, der mit elektrischer Energie von einem elektrischen Energiespeicher, beispielsweise einer Batterie des Kraftfahrzeuges oder Anhängers versorgt werden kann, oder über einen elektrischen Generator, der von dem Antriebsmotor des Kraftfahrzeugs angetrieben werden kann. Die elektrische Maschine kann als Radnabenmotor, radnaher Motor oder als sogenannte elektrische Achse realisiert sein.

Die Geschwindigkeit kann insbesondere die Geschwindigkeit des Fahrzeuges sein. Vorzugsweise kann die Geschwindigkeit eine Drehgeschwindigkeit, eine Tangentialgeschwindigkeit oder eine Vorwärtsgeschwindigkeit des Rades sein.

Der Schwellenwert kann vorzugsweise so vorbestimmt werden, dass die Steuereinheit die elektrische Maschine lediglich in einem Geschwindigkeitsbereich eines Anfahrbetriebes des Fahrzeuges antreibt. Der Schwellenwert kann beispielsweise einen Geschwindigkeitswert von 5, 6, 7, 8, 9 oder 10 km/h aufweisen oder einen entsprechenden Wert für eine Drehgeschwindigkeit des Rades.

Insbesondere kann die Steuereinheit mit der elektrischen Maschine signaltechnisch verbunden sein und ein entsprechendes Steuersignal an die elektrische Maschine senden, wobei die elektrische Maschine abhängig von dem Steuersignal das Drehmoment erzeugt. Beispielsweise sendet die Steuereinheit das Steuersignal zum Antreiben der elektrischen Maschine, wenn das Geschwindigkeitssignal eine Geschwindigkeit unterhalb des vorbestimmten Schwellwerts repräsentiert.

Beispielsweise sendet die Steuereinheit kein Steuersignal zum Antreiben der elektrischen Maschine, wenn das Geschwindigkeitssignal eine Geschwindigkeit gleich oder oberhalb des vorbestimmten Schwellwerts repräsentiert.

Gemäß einer ersten Alternative des Traktionssystems ist der Rotor der elektrischen Maschine derart ausgebildet, dass er an die Felge direkt drehmomentfest gekoppelt werden kann. Beispielsweise kann die direkte, drehmomentfeste Kopplung eine Verschraubung, Verklemmung, Verschweißung oder dergleichen zwischen dem Rotor und der Felge umfassen. Unter einer direkten Kopplung kann verstanden werden, dass zwischen Rotor und Felge kein Getriebe zwischengeschalten ist.

Gemäß einer zweiten Alternative umfasst das Traktionssystem das Getriebe. Der Rotor der elektrischen Maschine ist derart ausgebildet, dass er an die Felge indirekt drehmomentfest über das Getriebe gekoppelt werden kann. Das Getriebe kann beispielsweise ein Zahnradgetriebe, Zahnriemengetriebe, Kettengetriebe, Planetengetriebe oder dergleichen umfassen.

Die Stator-Verbindungseinheit kann als starre Verbindung zwischen dem Stator und dem Fahrzeug dienen, insbesondere zwischen dem Stator und dem Fahrzeugbauteil. Das Fahrzeugbauteil kann starr oder gefedert bzw. gedämpft mit einem Fahrgestell des Fahrzeuges verbunden sein. Die Stator-Verbindungseinheit kann insbesondere derart variabel ausgestaltet werden, dass es zur Verbindung des Stators mit unterschiedlichsten Fahrzeugen dienen kann.

Dadurch, dass eine Traktionshilfe oft nur zum Anfahren benötigt wird, ist das vorgeschlagene Traktionshilfesystem, das eine Traktionshilfe bei niedrigen Fahrgeschwindigkeiten (abhängig von den jeweils gültigen Zulassungsbestimmungen) liefern kann, ausreichend. Für die eingangs genannten Einsatzbedingungen ist das Traktionshilfesystem baulich vergleichsweise klein und ist oft die einzige Möglichkeit, eine aktive Traktionshilfe baulich zu realisieren. Daraus ergibt sich für unterschiedliche Fahrzeugkonfigurationen eine Möglichkeit der Traktionsunterstützung.

Darüber hinaus sind elektrische Maschinen zum Erzeugen des Drehmoments beim Anfahren im Vergleich zu Allradantriebssystem oder zuschaltbaren Antriebssystemen günstig und leicht.

Dadurch, dass es keine mechanische Verbindung vom Antrieb des Kraftfahrzeuges, beispielsweise einem Verbrennungsmotor, zur zusätzlichen angetrieben Achse gibt, können auch Kraftahrzeuge eine Traktionshilfe an einer zusätzlichen Radachse erhalten, bei denen es aufgrund der baulichen Bedingungen (z.B. Niederflurchassis) bisher nicht möglich war.

Ein weiterer Vorteil das System ist es, nun auch bei Anhänger bis 3,5 t zulässiges Gesamtgewicht eine aktive Traktionsunterstützung realisieren zu können.

Das Traktionshilfesystem ist so aufgebaut, dass es bereits werkseitig aber auch als Nachrüstlösung ausgeführt werden kann.

Vorzugsweise ist vorgesehen, dass die Felge als Teil des Traktionshilfesystems drehmomentfest mit dem Rotor verbunden ist. Bevorzugt ist die Felge zur drehmomentfesten Kopplung mit einer bestimmungsgemäß geformten Radnabe des Kraftfahrzeugs oder Anhängers ausgebildet. Bevorzugt ist das Traktionshilfesystem dazu ausgebildet, zumindest einen Teil des Drehmoments der elektrischen Maschine über die Felge in die Radnabe einzuleiten.

Insbesondere kann damit das Traktionshilfesystem die Felge umfassen. Beispielsweise kann die Felge den Rotor umfassen oder fest mit dem Rotor verbunden sein, sodass durch Nachrüstung der Felge bzw. durch Kopplung der Felge an die Radnabe das Traktionshilfesystem rotorseitig auf das Fahrzeug nachgerüstet werden kann. Alternativ kann die Felge beispielsweise einen abtriebseitigen Teil des Getriebes umfassen.

Die vorgegebene Radnabe kann insbesondere mit einer Welle des Fahrzeuges drehmomentfest verbunden sein, wobei die Welle über ein Wellenlager drehbar um die Achse mit dem Fahrzeug gelagert ist.

Insbesondere kann das Drehmoment von der elektrischen Maschine zumindest teilweise auf die Felge übertragen werden. Durch die drehfeste Verbindung der Felge mit der Radnabe kann somit das übertragene Drehmoment weiter in die Radnabe geleitet werden, sodass quasi die Felge als Drehmomentquelle und die Radnabe als Drehmomentsenke agieren kann. Die mit der Radnabe fest, insbesondere drehmomentfest verbundene Welle kann das übertragene Drehmoment weiter aufnehmen. Durch das übertragene Drehmoment kann sich die Welle im Wellenlager so wie das mit der Welle drehmomentfest verbundene Rad drehen, sodass das drehende Rad eine Traktion auf einen Untergrund ausüben kann. Das Fahrzeug kann somit bei der Anfahrt durch zusätzliche Traktion des Rades mittels des Traktionshilfesystems unterstützt werden.

Vorzugsweise ist vorgesehen, dass die Stator-Verbindungseinheit zumindest bereichsweise nach Art eines Bremssattels ausgeführt ist.

Typischerweise sind Bremssattel eines Rads eines Kraftfahrzeuges oder des Anhängers fest mit einem Sattelträger verbunden, insbesondere verschraubt. Der Sattelträger ist wiederum fest mit dem Fahrgestell des Fahrzeuges verbunden, insbesondere verschraubt, verschweißt oder dergleichen. Somit ist der Bremssattel fest mit dem Fahrgestell verbunden. Innerhalb des Bremssattels sind Bremsbeläge angeordnet, die in Wechselwirkung mit einer zwischen den Bremsbelägen drehbar befindlichen Bremsscheibe stehen können, um das Rad zu bremsen. Der Bremssattel dient folglich als Gehäuse und Lager für die Bremsbeläge und weist Anbindungsstellen für Steuerungsmittel (z.B. Handbremskabel oder hydraulische Bremsleitung) auf.

Nach Art eines Bremssattels kann somit derart verstanden werden, dass die Stator-Verbindungseinheit ein Gehäuse aufweisen kann, innerhalb welchem der Stator der elektrischen Maschine angeordnet und/oder gelagert sein kann. Das Gehäuse der Stator-Verbindungseinheit kann mit dem Fahrgestell vorzugsweise über einen Träger fest verbunden sein, insbesondere verschraubt, verschweißt oder dergleichen.

Beispielsweise kann die elektrische Maschine als bürstenloser Gleichstrommotor ausgebildet sein. Der Rotor kann hierbei als scheibenförmiger und/oder ringförmiger Permanentmagnet ausgebildet sein, der drehmomentfest mit der Felge verbunden sein kann. Der Stator kann Wicklungen zur Ausbildung eines drehenden Erreger-Magnetfeldes durch Kommutierung elektrischer Schaltungen aufweisen, wobei die Wicklungen über Stromanschlüsse mit der elektrischen Maschine verbunden sind. Die Wicklungen können innerhalb des Gehäuses angeordnet sein und über das Erreger-Magnetfeld auf dem Rotor wirken, sodass auf den Rotor das Drehmoment wirkt. Die Stator-Verbindungseinheit kann somit im unmittelbaren, örtlichen Zusammenhang stehen mit dem Rotor. Vorzugsweise kann sich die Stator-Verbindungseinheit zumindest teilweise in einem Hohlraum der Felge befinden und, insbesondere nahe, an dem Rotor angeordnet sein.

Dies hat den Vorteil, dass das Traktionshilfesystem kompakt ausgebildet ist und einfach und kostengünstig an nahezu jedem Fahrzeug realisiert werden kann.

Vorzugsweise ist vorgesehen, dass das Traktionshilfesystem eine Drehzahlmesseinheit zum Bestimmen einer Drehzahl des Rades aufweist. Bevorzugt ist die Drehzahlmesseinheit dazu ausgebildet, ein entsprechendes Drehzahlmesssignal als das Geschwindigkeitssignal an die Steuereinheit, insbesondere ausschließlich an die Steuereinheit, zu übermitteln. Abhängig von dem Drehzahlmesssignal kann die Steuereinheit insbesondere automatisch das entsprechende Steuersignal an die elektrische Maschine senden, wobei die elektrische Maschine abhängig vom dem Steuersignal das Drehmoment erzeugt.

Aus der Drehzahl des Rades kann folglich die Geschwindigkeit, insbesondere die Drehgeschwindigkeit und über einen Raddurchmesser eine Umfangs- bzw. Tangentialgeschwindigkeit des Rades bestimmt werden, wobei bei einer schlupffreien Drehung des Rades gegenüber dem Untergrund die Umfangsgeschwindigkeit einer Fahrgeschwindigkeit des Fahrzeuges entspricht. Bevorzugt kann die Steuereinheit die elektrische Maschine abhängig von der Drehzahl antreiben, nur wenn der Wert der Drehzahl unterhalb einem vorbestimmten Drehzahlgrenzwert liegt. Vorzugsweise kann der Schwellenwert den Drehzahlgrenzwert entsprechen oder umfassen.

Die ermittelte Drehzahl kann mittels des Drehzahlmesssignals von der Drehzahlmesseinheit an die Steuereinheit übermittelt werden, wobei die Drehzahlmesseinheit und die Steuereinheit vorzugsweise über einen elektrischen Leiter oder per Funk verbunden sein können.

Dies hat den Vorteil, dass automatisch, also insbesondere ohne ein Zutun eines Fahrzeugführers, das Traktionshilfesystem beim Anfahren des Fahrzeuges unterstützen kann.

Vorzugsweise ist vorgesehen, dass die Steuereinheit dazu ausgebildet ist, das durch die elektrische Maschine erzeugte Drehmoment zu verringern, insbesondere auf Null zu verringern, sobald eine dem Drehzahlmesssignal entsprechende Drehzahl einen vorbestimmten Wert überschreitet. Insbesondere kann der Schwellenwert dem vorbestimmten Wert entsprechen oder umfassen.

Dies hat den Vorteil, dass automatisch, also insbesondere ohne ein Zutun des Fahrzeugführers, das Traktionshilfesystem in einem Fahrbetrieb des Fahrzeuges bei einer höheren Geschwindigkeit als einer Anfahrgeschwindigkeit deaktiviert werden kann.

Vorzugsweise ist vorgesehen, dass das Traktionshilfesystem eine Drehmomentmesseinheit zum Bestimmen eines Drehmoments der elektrischen Maschine aufweist. Bevorzugt ist die Drehmomentmesseinheit dazu ausgebildet ist, ein entsprechendes Drehmomentmesssignal an die Steuereinheit, insbesondere ausschließlich an die Steuereinheit, zu übermitteln.

Insbesondere sind die Drehmomentmesseinheit und die Steuereinheit signaltechnisch verbunden. Vorzugsweise kann die Steuereinheit abhängig von der Drehmomentmesseinheit die elektrische Maschine zu steuern und/oder zu regeln, sodass mittels der elektrischen Maschine ein gewünschtes Drehmoment erzeugt werden kann.

Beispielsweise kann ein Drehmomentmaximalwert vorgegeben sein, wobei das Drehmoment so gesteuert und/oder geregelt wird, dass das Drehmoment lediglich maximal dem Drehmomentmaximalwert entsprechen kann.

Hieraus ergibt sich der Vorteil, dass das Rad eine gewünschte Traktion auf den Untergrund ausüben kann, sodass das Traktionshilfesystem weder zu wenig noch zu viel den Anfahrbetrieb des Fahrzeuges unterstützt. Des Weiteren kann die elektrische Maschine, sowie das optionale Getriebe vor ein Moment über dem Drehmomentmaximalwert bewahrt werden, sodass die elektrische Maschine und das optionale Getriebe nicht überlastet werden und eine Laufzeit verlängert werden kann.

Vorzugsweise ist vorgesehen, dass das Traktionshilfesystem eine tragbare Bedieneinheit aufweist. Bevorzugt ist die Steuereinheit dazu ausgebildet, das Erzeugen des Drehmoments abhängig von einer Betätigung der Bedieneinheit zu steuern.

Die tragbare Bedieneinheit kann insbesondere als kabellose Fernbedienung ausgebildet sein und beispielsweise durch eine interne Batterie oder einen internen Akku elektrisch versorgt sein. Die tragbare Bedieneinheit kann vorzugsweise von einem Fahrerraum des Kraftfahrzeuges aus von dem Fahrzeugführer bedient werden.

Insbesondere kann durch die Betätigung der Bedieneinheit ein Zustand bzw. ein Betrieb der Steuereinheit aktiviert oder deaktiviert werden, wobei lediglich in dem aktivierten Zustand die Steuereinheit das Steuersignal an die elektrische Maschine zur Ausübung des Drehmoments senden kann. Im deaktivierten Zustand kann kein Drehmoment durch die elektrische Maschine ausgeübt werden.

Dies hat den Vorteil, dass der Fahrzeugführer entscheiden kann, ob das Traktionshilfesystem beim Anfahren unterstützen soll oder nicht. Beispielsweise kann es auf einem befestigten Untergrund oder einer fallenden Hanglage der Fall sein, dass das Traktionshilfesystem nicht benötigt wird, sodass das Traktionshilfesystem auch nicht unnötigerweise durch zusätzliche Traktion das Anfahren unterstützt. Dadurch kann das Traktionshilfesystem vorteilhaft geschont werden.

Vorzugsweise ist vorgesehen, dass die Bedieneinheit dazu ausgebildet ist, ein Betätigungssignal, welches mit der Betätigung der Bedieneinheit korrespondiert, über eine Funkverbindung an die Steuereinheit zu übermitteln.

Beispielsweise kann das Betätigungssignal ein Aktivierungssignal zur Aktivierung des Betriebes der Steuereinheit bzw. ein Deaktivierungssignal zur Deaktivierung des Betriebes der Steuereinheit umfassen. Vorzugsweise kann das Betätigungssignal eine Intensitätsinformation umfassen, die der Fahrzeugführer durch die Bedieneinheit vorgeben kann, wobei abhängig von der Intensitätsinformation die elektrische Maschine gesteuert und/oder geregelt wird, sodass eine Intensität des Drehmoments abhängig von der Intensitätsinformation ist. Beispielsweise kann der Fahrzeugführer vorgeben, dass die elektrische Maschine mit einer Intensität von 50 % eines maximal erzeugbaren Drehmoments das Anfahren unterstützt.

Beispielsweise kann zusätzlich oder alternativ der Schwellenwert mittels der Bedieneinheit durch den Fahrzeugführer vorgegeben werden. Beispielsweise kann zusätzlich oder alternativ eine Zeitspanne mittels der Bedieneinheit durch den Fahrer bestimmt werden, in welcher das Traktionshilfesystem aktiviert ist.

Die Betätigungseinheit kann beispielsweise ein Berührbildschirm umfassen, sowie einen Taster oder einen Regler, mittels welcher der Fahrer das Traktionshilfesystem bedienen kann.

Dies hat den Vorteil, dass der Fahrzeugführer mittels der Bedieneinheit Vorgaben an die Steuereinheit geben kann, sodass das Traktionshilfesystem automatisch gemäß den Vorgaben des Fahrzeugführer beim Anfahren unterstützt.

Vorzugsweise ist vorgesehen, dass die Steuereinheit dazu ausgebildet ist, ein Bremssignal aus einer Bremsanlage des Kraftfahrzeugs oder Anhängers zu empfangen und das Erzeugen des Drehmoments abhängig von dem Bremssignal zu steuern.

Bevorzugt kann die elektrische Maschine nur dann durch die Steuereinheit angetrieben werden, wenn kein Bremssignal von der Steuereinheit empfangen wird. Die Steuereinheit kann beispielsweise mit der Bremsanlage des Fahrzeuges signaltechnisch verbunden sein. Das Bremssignal kann insbesondere durch die Bremsanlage generiert und von der Steuereinheit empfangen werden, wenn ein Betrieb der Bremsanlage aktiviert ist, insbesondere, wenn das Fahrzeug, beispielsweise ausgelöst durch das Betätigen eines Bremssignals des Fahrzeugführers, mittels der Bremsanlage bremst. Insbesondere kann der aktive Betrieb des Traktionshilfesystems deaktiviert bzw. unterbrochen werden, wenn ein Bremssignal empfangen wird.

Dies hat den Vorteil, dass das Traktionshilfesystem automatisch deaktiviert werden kann, sobald das Fahrzeug mittels der Bremsanlage bremst. Somit können auf das Rad keine entgegengesetzten Kräfte bzw. Momente wirken, sodass das Traktionshilfesystem und die Bremsanlage nicht unnötig belastet werden.

Vorzugsweise ist vorgesehen, dass die Steuereinheit dazu ausgebildet ist, ein Fahrsignal von einem Antriebssystem des Kraftfahrzeugs zu empfangen und das Erzeugen des Drehmoments abhängig von dem Fahrsignal zu steuern. Die Steuereinheit kann beispielsweise mit dem Antriebssystem des Fahrzeuges signaltechnisch verbunden sein. Das Fahrsignal kann insbesondere durch das Antriebssystem generiert und von der Steuereinheit empfangen werden, wenn der Antrieb des Kraftfahrzeuges in einem aktiven Betrieb ist und mit der durch den Antrieb angetriebenen Räder gekoppelt ist, sodass sich die angetriebenen Räder drehen. Insbesondere kann vorgesehen sein, dass die Steuereinheit die elektrische Maschine nur dann antreibt, wenn das Fahrsignal an der Steuereinheit anliegt.

Vorzugsweise ist vorgesehen, dass das Traktionshilfesystem einen elektrischen Energiespeicher zum Bereitstellen zumindest eines Teils einer elektrischen Energie aufweist. Bevorzugt ist der elektrische Energiespeicher über eine, vorzugsweise reversibel verbindbare, Ladeschnittstelle mit einem Bordsystem des Kraftfahrzeugs oder Anhängers koppelbar.

Insbesondere wird zumindest der Teil der elektrischen Energie der elektrischen Maschine bereitgestellt, beispielsweise über ein Stromversorgungskabel. Der elektrische Energiespeicher kann vorzugsweise ein eigens für das Traktionshilfesystem bereitgestellter Energiespeicher sein, beispielsweise ausgebildet als Akkumulator. Alternativ kann die elektrische Energie direkt von dem elektrischen Generator des Kraftfahrzeugs bereitgestellt werden.

Optional kann es vorgesehen sein, dass die Ladeschnittstelle vom Bordsystem verbunden und getrennt werden kann, beispielsweise über das Einstecken oder Ausstecken eines Stromsteckers. Beispielsweise könnte der Energiespeicher eines Traktionshilfesystems des Anhängers über einen üblichen Anhängerkupplungsstecker und einer entsprechenden Anhängerkupplungssteckdose mit dem Bordnetz des ziehenden Kraftfahrzeuges verbunden und getrennt werden.

Der Energiespeicher kann insbesondere über die Ladeschnittstelle mit dem Bordsystem geladen werden, wobei das Bordsystem elektrisch mit dem Generator oder einem Primärenergiespeicher eines elektrischen Kraftfahrzeuges verbunden ist. Zusätzlich oder alternativ kann vorgesehen sein, dass der Energiespeicher mittels einer weiteren Ladeschnittstelle durch eine kraftfahrzeugexterne Stromquelle geladen werden kann, beispielsweise über ein Stromkabel, das beispielsweise mit dem Stromnetz verbunden ist.

Der Teil der elektrischen Energie, die bereitgestellt wird, kann insbesondere durch die Steuereinheit gesteuert und/oder geregelt werden, sodass abhängig von dem Teil der elektrischen Energie die elektrische Maschine einen Teil eines maximal möglichen Drehmoments bereitstellt wird.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Durch einen weiteren Aspekt der Erfindung wird ein Kraftfahrzeug oder ein Anhänger zum Anhängen an das Kraftfahrzeug bereitgestellt, wobei das Kraftfahrzeug oder der Anhänger ein erfindungsgemäßes Traktionshilfesystem aufweist. Das Kraftfahrzeug und der Anhänger können auch unter dem Oberbegriff Fahrzeug subsumiert werden.

Durch einen weiteren Aspekt der Erfindung wird ein Verfahren zum Betreiben eines Traktionshilfesystems bereitgestellt, bei welchem zumindest in Abhängigkeit von einem Geschwindigkeitssignal, nur wenn dieses Geschwindigkeitssignal eine Geschwindigkeit unterhalb eines vorbestimmten Schwellwerts repräsentiert, ein Drehmoment durch eine elektrischen Maschine erzeugt wird, wobei ein Rotor der elektrischen Maschine über eine Rotor-Verbindungseinheit mit einer Felge des Rades und ein Stator der elektrischen Maschine über eine Stator-Verbindungseinheit mit einem Fahrzeugbauteil des Kraftfahrzeugs oder Anhängers verbunden ist. Insbesondere kann eine Einleitung zumindest eines Teiles des Drehmoments der elektrischen Maschine in eine Radnabe, an der das Rad befestigt ist, über die Felge erfolgen.

Beispielsweise kann zumindest ein weiterer Teil des Drehmoments der elektrischen Maschine in eine weitere Radnabe eingeleitet werden, an der ein weiteres Rad befestigt ist.

Vorzugsweise ist vorgesehen, dass das Erzeugen des Drehmoments auf eine Betätigung einer tragbaren Bedieneinheit des Traktionshilfesystems hin erfolgt.

Die für das erfindungsgemäße Traktionshilfesystem offenbarten Merkmale und Ausführungen sollen mutatis mutandis auch für das erfindungsgemäße Verfahren gelten.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen. Dabei zeigt:
- Fig. 1: eine schematische Darstellung eines Kraftfahrzeugs mit einem erfindungsgemäßen Traktionshilfesystem in der Ausführung als elektrische Achse;
- Fig. 2: eine schematische Darstellung eines Kraftfahrzeugs mit einem erfindungsgemäßen Traktionshilfesystem in der Ausführung als radnaher Elektromotor;
- Fig. 3: eine schematische Darstellung eines Kraftfahrzeugs mit einem erfindungsgemäßen Traktionshilfesystem in der Ausführung als Radnabenmotor;
- Fig. 4: eine schematische Darstellung eines Anhängers mit einem erfindungsgemäßen Traktionshilfesystem in der Ausführung als elektrische Achse;
- Fig. 5: eine schematische Darstellung eines Anhängers mit einem erfindungsgemäßen Traktionshilfesystem in der Ausführung als radnaher Elektromotor;
- Fig. 6: eine schematische Darstellung eines Anhängers mit einem erfindungsgemäßen Traktionshilfesystem in der Ausführung als Radnabenmotor;

- Fig. 7: eine schematische Darstellung eines Kraftfahrzeugs mit einem Anhänger mit jeweils einem erfindungsgemäßen Traktionshilfesystem gemäß einer bevorzugten Ausführungsform;
- Fig. 8: eine schematische Darstellung eines Rads mit einem erfindungsgemäßen Traktionshilfesystem gemäß einer bevorzugten Ausführungsform;
- Fig. 9: ein Ablaufdiagramm eines erfindungsgemäßen Verfahrens gemäß einer bevorzugten Ausführungsform.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren bezeichnen gleiche Bezugszeichen jeweils funktionsgleiche Elemente.

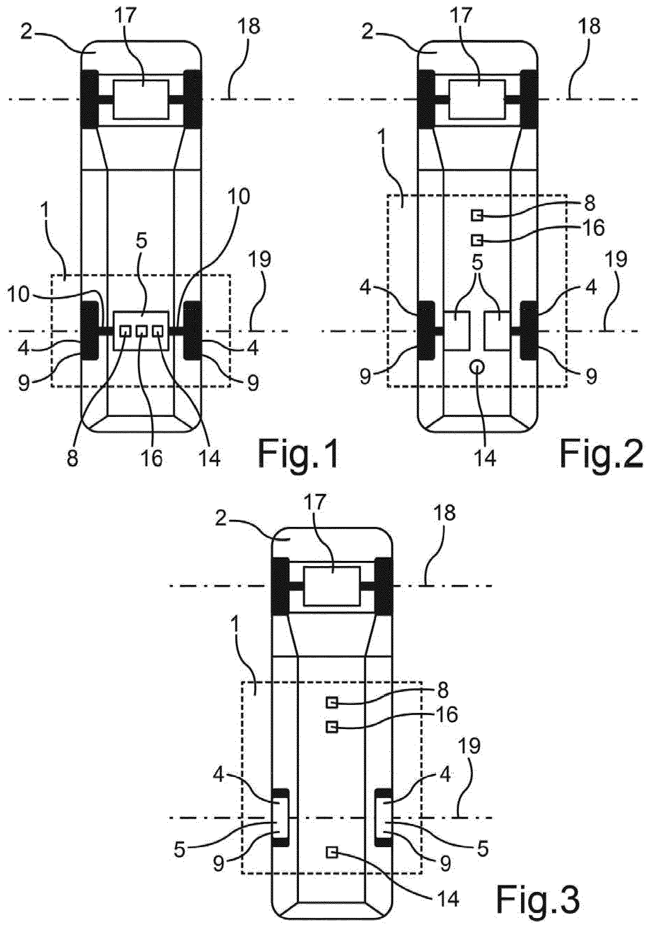

Die Fig. 1 bis Fig. 3 zeigen schematisch ein Kraftfahrzeug 2, beispielsweise ein Wohnmobil, mit einem erfindungsgemäßen Traktionshilfesystem 1 in einer bevorzugten Ausführungsform. Eine Vorderachse 18 des Kraftfahrzeuges 2 kann beispielsweise durch einen Antrieb 17, zum Beispiel durch einen Verbrennungsmotor oder einen Elektromotor, angetrieben werden. Räder 4 einer Hinterachse 19 des Fahrzeuges 2 können hingegen in diesem Beispiel nicht durch den Antrieb 17 angetrieben werden.

Das Traktionshilfesystem 1 kann in diesem Beispiel für die Traktion der Räder 4 der Hinterachse 19 fungieren. Das Traktionshilfesystem kann zumindest eine elektrische Maschine 5, vorzugsweise einen Gleichstrom-Elektromotor, aufweisen, der von einer Steuereinheit 8 des Traktionshilfesystems 1 gesteuert und beispielsweise von einem elektrischen Energiespeicher 16 elektrisch versorgt werden kann. Die elektrische Maschine 5 kann insbesondere dazu ausgebildet sein, ein Rad 4 oder beide Räder 4 der Hinterachse 19 mit einem Drehmoment zu beaufschlagen. Dieses Drehmoment kann insbesondere über eine Drehmomentmesseinheit 14 des Traktionshilfesystems 1 gemessen werden.

In der Fig. 1 wird das Traktionshilfesystem 1 in der Ausführung als sogenannte elektrische Achse gezeigt. Die elektrische Achse ist eine kompakte, kostenattraktive Lösung für den elektrischen Antrieb einer Achse, beispielsweise den Rädern 4 der Hinterachse 19. Die elektrische Maschine 5, Leistungselektronik wie beispielsweise die Steuereinheit 8 und ein Getriebe 10 können zu einer kompakten Einheit kombiniert sein, die unmittelbar die Räder 4 der Hinterachse 19 antreiben kann. Die elektrische Maschine 5 kann direkt oder indirekt über das Getriebe 10 mit den Rädern 4 verbunden sein.

In der Fig. 2 wird das Traktionshilfesystem 1 in der Ausführung als radnaher Elektromotor gezeigt. Im gezeigten Beispiel kann das Traktionshilfesystem 1 zwei, also jeweils eine elektrische Maschine 5 pro anzutreibenden Rad 4 umfassen. Die elektrische Maschine 5 kann jeweils direkt mit dem zugehörigen Rad 4 oder über das Getriebe 10 verbunden sein.

In der Fig. 3 wird das Traktionshilfesystem 1 in der Ausführung als Radnabenmotor gezeigt. Insbesondere ist die elektrische Maschine 5 des Traktionshilfesystems als Radnabenmotor ausgebildet. Im gezeigten Beispiel ist in beiden Rädern 5 der Hinterachse 19 die elektrische Maschine 5 als Radnabenmotor integriert.

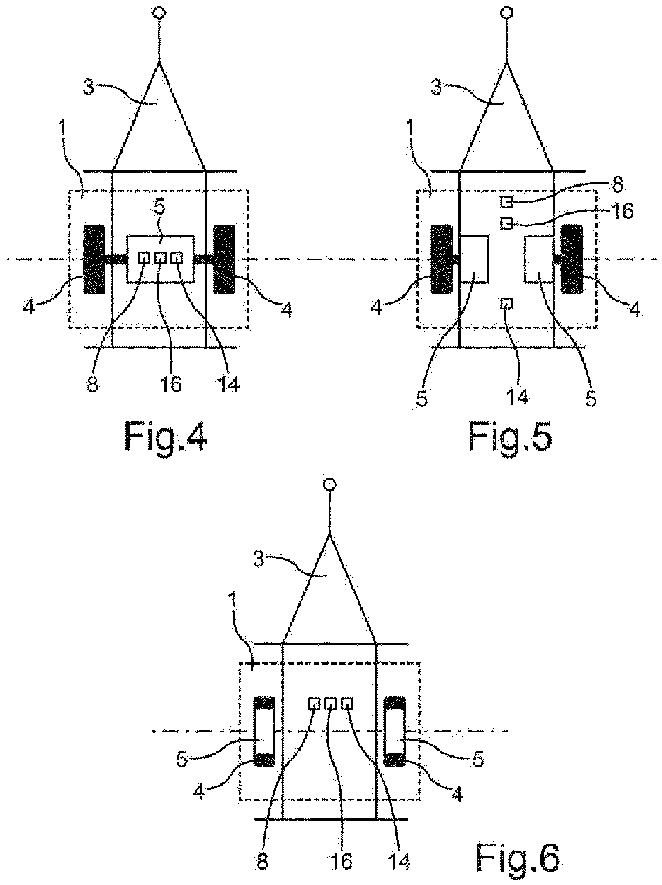

Die Fig. 4 bis Fig. 6 zeigen schematisch ein Anhänger 3, beispielsweise einen einachsigen Anhänger 3, mit einem erfindungsgemäßen Traktionshilfesystem 1 in einer bevorzugten Ausführungsform. Merkmale der jeweiligen Ausführungsform des Traktionshilfesystems 1 gemäß Fig. 4 bis Fig. 6 sind jeweils in einer Ausführungsform gezeigt, die bereits im Zusammenhang mit dem Kraftfahrzeug 2 offenbart sind. Entsprechend gelten die Offenbarungen des Traktionshilfesystems des Kraftfahrzeuges 2 für den Anhänger 3 entsprechend.

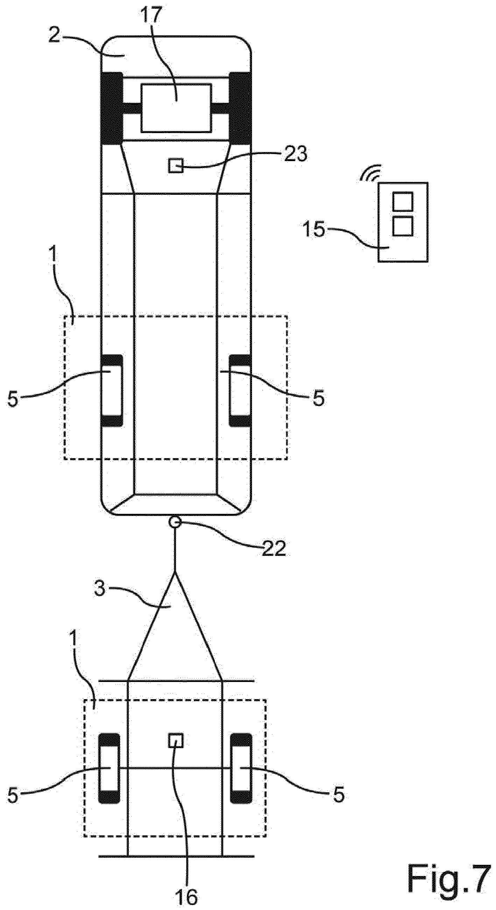

Die Fig. 7 zeigt schematisch ein Kraftfahrzeug 2 mit einem Anhänger 3 mit jeweils einem erfindungsgemäßen Traktionshilfesystem 1 gemäß einer bevorzugten Ausführungsform. Das Kraftfahrzeug 2 ist über eine Anhängerkupplung 22 mit dem Anhänger 3 verbunden. Die jeweiligen Traktionshilfesystem 1 können beispielsweise jeweils per Funk über die tragbare Bedieneinheit 15 durch einen Fahrzeugführer bedient werden. Der elektrische Energiespeicher 16 kann insbesondere über eine Anhängerkupplungssteckverbindung und über das jeweilige Bordnetz mit einem Generator 23 geladen werden, wobei der Generator 23 von dem Antrieb 17 des Kraftfahrzeugs 2 angetrieben werden kann.

Weitere Merkmale des Kraftfahrzeuges 2 mit dem Anhänger 3 sind in der Beschreibung zu den vorhergehenden Figuren offenbart.

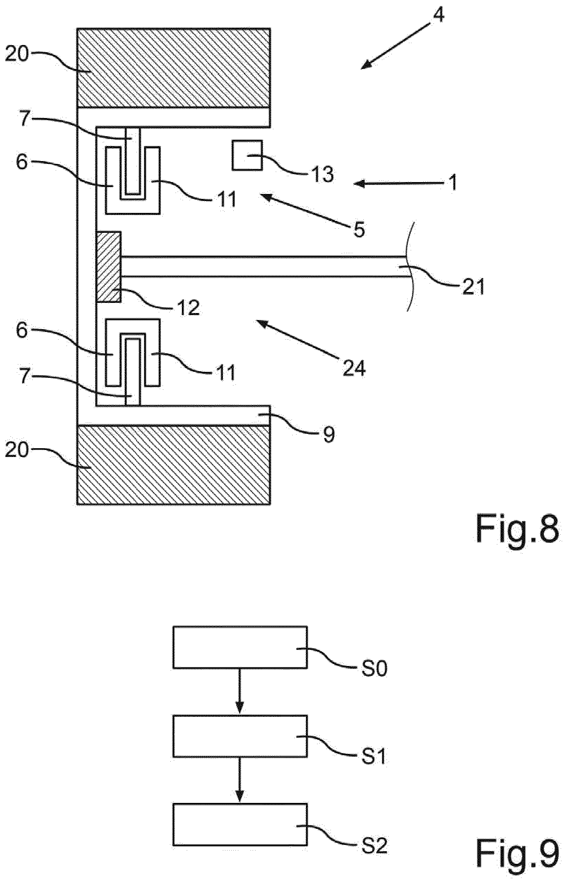

Die Fig. 8 zeigt schematisch ein Rad 4 mit einem erfindungsgemäßen Traktionshilfesystem 1 gemäß einer bevorzugten Ausführungsform. Diese Ausführungsform ist lediglich beispielhaft. Auf einer Außenseite einer Felge 9 des Rades 4 ist ein Reifen 20 montiert. Eine Innenseite der Felge 9 liegt an einer Radnabe 12 des Kraftfahrzeuges 2 oder des Anhängers 3 (im Folgenden auch als Fahrzeug bezeichnet) an und ist drehmomentfest mit dieser verbunden, insbesondere verschraubt. Die Radnabe 12 wiederum ist drehmomentfest mit einer Welle 21 des Fahrzeuges 2, 3 verbunden. Die Drehzahl des Rades 4 kann beispielsweise über eine Drehzahlmesseinheit 13 des Traktionshilfesystems 1 gemessen werden.

Das Traktionshilfesystem 1 kann zumindest teilweise in einen Hohlraum 24 der Felge 9 integriert sein, insbesondere die elektrische Maschine 5, umfassend einen Rotor 7 und einen Stator 6.

Der Rotor 7 der elektrischen Maschine 5 kann beispielsweise fest mit der Felge verbunden sein, beispielsweise über eine Rotor-Verbindungseinheit (nicht gezeigt). Der Rotor 7 kann beispielsweise flach und ringförmig ausgebildet sein und an einer inneren Mantelfläche der Felge 9 in einer Umfangsrichtung der Felge 9 mit dieser verbunden sein.

Der Stator 6 der elektrischen Maschine 5 kann ein elektromagnetisches Erregerfeld erzeugen, welches sich auf den permanentmagnetischen Stator 7 auswirken kann und folglich ein Drehmoment auf die Felge verursachen kann. Der Stator 6 kann in einer Stator-Verbindungseinheit 11 integriert sein. Die Stator-Verbindungseinheit 11 kann nach Art eines Bremssattels ausgebildet sein. Insbesondere kann die Stator-Verbindungseinheit 11 den Rotor 7 U-förmig zumindest teilweise umschließen, sodass der Rotor 7 innerhalb einer Öffnung der U-Form rotieren kann. Die Stator-Verbindungseinheit 11 kann über einen Träger mit einem Fahrzeugbauteil des Fahrzeuges 2, 3 fest verbunden sein, wobei das Fahrzeugbauteil gegenüber einem Fahrgestell des Fahrzeuges 2, 3 starr oder gefedert bzw. gedämpft sein kann. Die Welle 21 kann über ein Wellenlanger rotierbar mit dem Fahrzeugbauteil verbunden werden (nicht gezeigt).

Der Stator 6 bzw. die Stator-Verbindungseinheit 11 kann entsprechend dem Rotor 7 ebenfalls ringförmig und komplementär zur flachen Ausbildung des Rotors 7 ausgebildet sein. Der Stator 6 bzw. die Stator-Verbindungseinheit 11 kann alternativ lediglich abschnittsweise ringförmig ausgebildet sein und in Umfangsrichtung einen oder mehrere Abschnitte aufweisen.

Die Fig. 9 zeigt ein Ablaufdiagramm eines erfindungsgemäßen Verfahrens gemäß einer bevorzugten Ausführungsform. In einem Initiierungsschritt S0 kann das Erzeugen des Drehmoments auf eine Betätigung der tragbaren Bedieneinheit 15 des Traktionshilfesystems 1 hin erfolgen. In einem ersten Schritt S1 kann zum Betreiben eines Traktionshilfesystem 1, bei welchem zumindest in Abhängigkeit von einem Geschwindigkeitssignal, nur wenn dieses Geschwindigkeitssignal eine Geschwindigkeit unterhalb eines vorbestimmten Schwellwerts repräsentiert, ein Drehmoment durch eine elektrischen Maschine 5 erzeugt werden. In einem zweiten Schritt S2 kann der Rotor 7 der elektrischen Maschine 5 mit der Felge 8 des Rades 4 und der Stator 6 der elektrischen Maschine 5 mit einem Fahrzeugbauteil des Fahrzeuges 2, 3 verbunden sein, wobei eine Einleitung eines Teils des Drehmoments der elektrischen Maschine 5 in eine Radnabe 12, an der das Rad befestigt ist, über die Felge 9 erfolgt.

Insgesamt zeigt das Beispiel, wie durch die Erfindung ein Traktionshilfesystem zum Erzeugen eines Drehmoments an einem Rad eines Kraftfahrzeugs oder Anhängers bereitgestellt wird.

Durch die Erfindung kann insbesondere ein leichtes Nutzfahrzeug oder Fahrzeug mit besonderer Zweckbestimmung, insbesondere, aber nicht ausschließlich, Reisemobile mit mindestens zwei Achsen bereitgestellt werden, wobei mindestens ein Achsantrieb durch einen Antriebsmotor erfolgt und bei der mindestens eine weitere Achse nicht durch das Antriebsmotor angetrieben ist und diese Achse zwei Außenseiten aufweist, die je Seite eine Radnabe zur Aufnahme je mindestens eines Rades hat, sowie Anhänger bis 3,5 Tonnen zulässiges Gesamtgewicht, bei denen mindestens eine Achse und diese Achse zwei Außenseiten aufweist, die je Seite eine Radnabe zur Aufnahme je mindestens eines Rades hat, wobei das mindestens ein Rad jeder Seite dieser Achse einen elektrischen Antrieb aufweist, wobei der Antrieb graduell per HMI (Schalter oder Display) im Fahrerhaus oder automatisch durch Signale aus einem Steuergerät als Anfahrhilfe vor Fahrtbeginn zuschaltbar ist und die Antriebsverbindung zwischen den Rädern und der Achse bei Überschreiten der zulassungsseitig vorgegebenen Geschwindigkeit vorzugsweise durch mechanische oder durch elektrische Entkoppelung getrennt wird.

### BEZUGSZEICHENLISTE:

- 1: Traktionshilfesystem
- 2: Kraftfahrzeug
- 3: Anhänger
- 4: Rad
- 5: Elektrische Maschine
- 6: Stator
- 7: Rotor
- 8: Steuereinheit
- 9: Felge
- 10: Getriebe
- 11: Stator-Verbindungseinheit
- 12: Radnabe
- 13: Drehzahlmesseinheit
- 14: Drehmomentmesseinheit
- 15: Bedieneinheit
- 16: Elektrischer Energiespeicher
- 17: Antrieb des Kraftfahrzeugs
- 18: Vorderachse
- 19: Hinterachse
- 20: Reifen
- 21: Welle
- 22: Anhängerkupplung
- 23: Generator
- 24: Hohlraum der Felge

## Patentansprüche

1. Traktionshilfesystem (1) zum Erzeugen eines Drehmoments an einem Rad (4) eines Kraftfahrzeugs (2) oder Anhängers (3), mit
- einer elektrischen Maschine (5) zum Erzeugen des Drehmoments, wobei die elektrische Maschine (5) einen Stator (6) und einen Rotor (7) aufweist, und
- einer Steuereinheit (8), welche dazu ausgebildet ist, ein Steuersignal zum Antreiben der elektrischen Maschine (5) zumindest in Abhängigkeit von einem Geschwindigkeitssignal nur dann zu senden (S. 4, letzter Absatz), wenn dieses Geschwindigkeitssignal eine Geschwindigkeit unterhalb eines vorbestimmten Schwellwerts repräsentiert,
**dadurch gekennzeichnet, dass**
- der Rotor (7) entweder zur direkten drehmomentfesten Kopplung mit einer vorbestimmten Felge (9) oder zur indirekten drehmomentfesten Kopplung mit der bestimmungsgemäß geformten Felge (9) über ein Getriebe (10) ausgebildet ist,
- das Traktionshilfesystem (1) eine Stator-Verbindungseinheit (11) aufweist, wobei die Stator-Verbindungseinheit (11) zur direkten drehmomentfesten Kopplung mit einem bestimmungsgemäßen Fahrzeugbauteil des Kraftfahrzeugs (2) oder Anhängers (3) ausgebildet ist, und
- die Felge (9) als Teil des Traktionshilfesystems (1) drehmomentfest mit dem Rotor (7) verbunden ist, wobei die Felge (9) zur drehmomentfesten Kopplung mit einer bestimmungsgemäß geformten Radnabe (12) des Kraftfahrzeugs (2) oder Anhängers (3) ausgebildet ist, und wobei das Traktionshilfesystem (1) dazu ausgebildet ist, zumindest einen Teil des Drehmoments der elektrischen Maschine (5) über die Felge (9) in die Radnabe (12) einzuleiten.

2. Traktionshilfesystem (1) nach Anspruch 1,
**dadurch gekennzeichnet, dass**
die Stator-Verbindungseinheit (11) zumindest bereichsweise nach Art eines Bremssattels ausgeführt ist.

3. Traktionshilfesystem (1) nach einem der vorhergehenden Ansprüche,
**dadurch gekennzeichnet, dass**
das Traktionshilfesystem (1) eine Drehzahlmesseinheit (13) zum Bestimmen einer Drehzahl des Rades (4) aufweist, wobei die Drehzahlmesseinheit (13) dazu ausgebildet ist, ein entsprechendes Drehzahlmesssignal als das Geschwindigkeitssignal an die Steuereinheit (8), insbesondere ausschließlich an die Steuereinheit (8), zu übermitteln.

4. Traktionshilfesystem (1) nach Anspruch 3,
**dadurch gekennzeichnet, dass**
die Steuereinheit (8) dazu ausgebildet ist, das durch die elektrische Maschine (5) erzeugte Drehmoment zu verringern, insbesondere auf Null zu verringern, sobald eine dem Drehzahlmesssignal entsprechende Drehzahl einen vorbestimmten Wert überschreitet.

5. Traktionshilfesystem (1) nach einem der vorhergehenden Ansprüche,
**dadurch gekennzeichnet, dass**
das Traktionshilfesystem (1) eine Drehmomentmesseinheit (14) zum Bestimmen eines Drehmoments der elektrischen Maschine (5) aufweist, wobei die Drehmomentmesseinheit (14) dazu ausgebildet ist, ein entsprechendes Drehmomentmesssignal an die Steuereinheit (8), insbesondere ausschließlich an die Steuereinheit (8), zum Erzeugen eines Ansteuersignals für die elektrische Maschine (5) zu übermitteln.

6. Traktionshilfesystem (1) nach einem der vorhergehenden Ansprüche,
**dadurch gekennzeichnet, dass**
das Traktionshilfesystem (1) eine tragbare Bedieneinheit (15) aufweist, wobei die Steuereinheit (8) dazu ausgebildet ist, das Erzeugen des Drehmoments abhängig von einer Betätigung der Bedieneinheit (15) zu steuern.

7. Traktionshilfesystem (1) nach Anspruch 6,
**dadurch gekennzeichnet, dass**
die Bedieneinheit (15) dazu ausgebildet ist, ein Betätigungssignal, welches mit der Betätigung der Bedieneinheit (15) korrespondiert, über eine Funkverbindung an die Steuereinheit (8) zu übermitteln.

8. Traktionshilfesystem (1) nach einem der vorhergehenden Ansprüche,
**dadurch gekennzeichnet, dass**
die Steuereinheit (8) dazu ausgebildet ist, ein Bremssignal aus einer Bremsanlage des Kraftfahrzeugs (2) oder Anhängers (3) zu empfangen und das Erzeugen des Drehmoments abhängig von dem Bremssignal zu steuern.

9. Traktionshilfesystem (1) nach einem der vorhergehenden Ansprüche,
**dadurch gekennzeichnet, dass**
die Steuereinheit (8) dazu ausgebildet ist, ein Fahrsignal von einem Antriebssystem des Kraftfahrzeugs (2) zu empfangen und das Erzeugen des Drehmoments abhängig von dem Fahrsignal zu steuern.

10. Traktionshilfesystem (1) nach einem der vorhergehenden Ansprüche,
**dadurch gekennzeichnet, dass**
das Traktionshilfesystem (1) einen elektrischen Energiespeicher aufweist, wobei der elektrische Energiespeicher über eine, vorzugsweise reversibel verbindbare, Ladeschnittstelle mit einem Bordsystem des Kraftfahrzeugs oder Anhängers koppelbar ist.

11. Kraftfahrzeug (2) oder Anhänger (3) zum Anhängen an das Kraftfahrzeug (2), wobei das Kraftfahrzeug (2) oder der Anhänger (3) ein Traktionshilfesystem (1) nach einem der vorhergehenden Ansprüche aufweist.

12. Verfahren zum Betreiben eines Traktionshilfesystem (1), bei welchem zumindest in Abhängigkeit von einem Geschwindigkeitssignal, nur wenn dieses Geschwindigkeitssignal eine Geschwindigkeit unterhalb eines vorbestimmten Schwellwerts repräsentiert, ein Drehmoment durch eine elektrischen Maschine (5) erzeugt wird (S1), wobei ein Rotor (7) der elektrischen Maschine (5) mit einer Felge (9) des Rades (4) und ein Stator (6) der elektrischen Maschine (5) mit einem Fahrzeugbauteil des Kraftfahrzeugs (2) oder Anhängers (3) verbunden ist und zumindest einen Teil des Drehmoments der elektrischen Maschine (5) über die Felge (9) in die Radnabe (12) eingeleitet wird.

13. Verfahren nach Anspruch 12,
**dadurch gekennzeichnet, dass**
das Erzeugen des Drehmoments auf eine Betätigung einer tragbaren Bedieneinheit des Traktionshilfesystems (1) hin erfolgt (S0).
